# EUROPÄISCHE PATENTSCHRIFT

(11) **EP 2 982 046 B1**
(45) Veröffentlichungstag und Bekanntmachung des Hinweises auf die Patenterteilung: **30.05.2018**
(21) Anmeldenummer: 14715570.9
(22) Anmeldetag: 02.04.2014
(51) Int. Cl.: H04B 5/00, G06K 19/073

(54) **VORRICHTUNG MIT KOMMUNIKATIONSMITTELN UND EINER AUFNAHME FÜR EINE CHIPKARTE**
DEVICE HAVING COMMUNICATIONS MEANS AND A RECEPTACLE FOR A CHIP CARD
DISPOSITIF POURVU DE MOYENS DE COMMUNICATION ET D'UN LOGEMENT POUR UNE CARTE À PUCE

(30) Priorität: 04.04.2013 DE 102013005619
(43) Veröffentlichungstag der Anmeldung: 10.02.2016
(73) Patentinhaber: certgate GmbH, 90409 Nürnberg (DE)
(72) Erfinder: WANG, Jian, Chengdu Sichuan 610041 (CN)
(74) Vertreter: Cohausz & Florack
(86) Internationale Anmeldenummer: PCT/EP2014/056592
(87) Internationale Veröffentlichungsnummer: WO 2014/161883

(56) Entgegenhaltungen:
- WO-A2-2007/076456
- DE-A1-102010 061 351
- US-A1- 2006 255 160
- US-A1- 2008 099 559

## Beschreibung

Die Erfindung betrifft eine Vorrichtung mit einer Aufnahme, die eingerichtet ist, eine Chipkarte aufzunehmen.

Chipkarten kommen bei vielen verschiedenen Anwendungen zum Einsatz. Ein Einsatzgebiet ist die Authentifizierung, z.B. im Kontext der elektronischen Erledigung von Bankgeschäften (Online-Banking) oder auch am Geldautomaten. Ein anderes Einsatzgebiet ist die Verwendung als Schlüssel für ein elektronisches Schloss, z.B. ein Kraftfahrzeugsschloss oder ein Schloss an einem Gebäudeeingang. Auch zum Speichern und zum Nachweis eines Guthabens, z.B. eines Guthabens für die Inanspruchnahme von Telekommunikationsdienstangeboten, werden Chipkarten eingesetzt. Chipkarten enthalten oftmals einen Speicher, eine einfache Logik oder einen Prozessor. Die Verarbeitungsleistung des Prozessors kann beispielsweise für die Abarbeitung von Programmcode genutzt werden, der beispielsweise in einem Speicher der Chipkarte hinterlegt sein kann und unterschiedlichsten Zwecken dienen kann.

Um auf die Chipkarte zugreifen zu können und sie damit nutzbar zu machen, muss von außen ein Zugang zu der Chipkarte, d.h. zu ihrem Speicher, ihrer Logik oder ihrem Prozessor, möglich sein. Der Zugriff kann entweder kontaktbehaftet oder kontaktlos erfolgen. Die kontaktbehaftete Kommunikation kann in einigen Anwendungssituationen sicherheitstechnisch vorteilhaft sein. Außerdem kann der Aufwand für das ermöglichen einer kontaktbehafteten Kommunikation geringer sein. Für die kontaktbehaftete Kommunikation kann die Chipkarte auf einer Oberfläche mit Kontakten ausgerüstet sein. Die kontaktlose Kommunikation kann jedoch in einigen Anwendungssituationen für den Nutzer der Chipkarte komfortabler sein. Beispiele kontaktloser Kommunikationstechnologien, die von einer Chipkarte beherrschbar sein können, umfassen Bluetooth, RFID (radio-frequency identification) und die Nahfeldkommunikation (near field communication, NFC). Es existieren sogenannte Dual-Interface-Chipkarten, welche sowohl für die kontaktbehaftete als auch für die kontaktlose Kommunikation ausgerüstet sind.

Die Patentanmeldung mit der Veröffentlichungsnummer US 2008/0099559 A1 betrifft einen Dual-Interface SIM-Karten Adapter für ein Mobiltelefon. Der Adapter kann in einen Sim-Karten Slot des Mobiltelefons für eine kontaktbehaftete elektronische Kommunikation und für eine kontaktlose elektronische Kommunikation eingesetzt werden.

Die Patentanmeldung mit der Veröffentlichungsnummer US 2006/0255160 A1 betrifft eine Speicherkarte, die mit einem geeigneten Kartenleser Daten durch einen nicht-Kontakt-Modus oder einen Kontakt-Modus austauschen kann.

Es ist eine Aufgabe der Erfindung, eine Vorrichtung anzugeben, die die Möglichkeiten der Kommunikation mit einer Chipkarte erweitert.

Diese Aufgabe wird erfindungsgemäß durch eine Vorrichtung gelöst, die eine Aufnahme umfasst, die eingerichtet ist, eine Chipkarte aufzunehmen. Die Chipkarte ist für eine kontaktlose Kommunikation mit einer ersten Hardwareschnittstelle eingerichtet. Die Vorrichtung umfasst ferner Kommunikationsmittel, die eingerichtet sind, eine kontaktlose Kommunikation mit einer zweiten Hardwareschnittstelle zu ermöglichen. Die erste Hardwareschnittstelle und die zweite Hardwareschnittstelle sind dabei Hardwareschnittstellen unterschiedlichen Typs. Die Kommunikationsmittel sind eingerichtet, eine Kommunikation der Kommunikationsmittel mit der Chipkarte derart zu ermöglichen, wenn die Chipkarte in der Aufnahme aufgenommen ist, dass eine Kommunikation der zweiten Hardwareschnittstelle mit der Chipkarte unmittelbar über die Kommunikationsmittel erfolgen kann. Wird eine für die kontaktlose Kommunikation mit einer ersten Hardwareschnittstelle eingerichtete Chipkarte von der Aufnahme einer erfindungsgemäßen Vorrichtung aufgenommen, können die Kommunikationsmittel der Vorrichtung mit der Chipkarte kommunizieren. Da die Kommunikationsmittel eingerichtet sind, eine kontaktlose Kommunikation mit einer zweiten Hardwareschnittstelle zu ermöglichen, kann also mittels der Kommunikationsmittel eine Kommunikation zwischen der zweiten Hardwareschnittstelle und der Chipkarte erfolgen. Ein Zugriff auf die Chipkarte über die zweite Hardwareschnittstelle und die Kommunikationsmittel wird möglich. Mit der Chipkarte kann dabei so kommuniziert werden, als sei sie selbst für die Kommunikation mit der zweiten Hardwareschnittstelle konzipiert. Diese Kommunikationsmöglichkeit tritt neben die Möglichkeit, mit der Chipkarte kontaktlos über die erste Hardwareschnittstelle zu kommunizieren. Dadurch, dass die erste Hardwareschnittstelle und die zweite Hardwareschnittstelle Hardwareschnittstellen unterschiedlichen Typs sind, wird die Chipkarte über zwei unterschiedliche Typen von Hardwareschnittstellen erreichbar. Die Möglichkeiten der kontaktlosen Kommunikation mit der Chipkarte sind erweitert. In unterschiedlichen Bediensituationen kann die jeweils aufgrund ihrer spezifischen Eigenschaften besser geeignete Hardwareschnittstelle verwendet werden, um mit der Chipkarte zu kommunizieren.

Die erfindungsgemäße Vorrichtung kann insbesondere eine portable Vorrichtung sein. Es kann sich um eine autonome Vorrichtung handeln, die jedenfalls nicht permanent auf eine externe Energieversorgung angewiesen ist. Die Vorrichtung kann räumlich kompakt aufgebaut sein. Sie kann dazu im Rahmen eines Ausführungsbeispiels ohne Anzeigemittel und/oder ohne Benutzereingabemittel, z.B. Tasten, Drehknöpfe oder einen berührungsempfindlichen Bildschirm (Touchscreen), auskommen, d.h. anzeigelos und/oder eingabemittellos ausgestaltet sein. Bei einem Ausführungsbeispiel sind die Abmessungen der Vorrichtung kleiner oder gleich den gemäß der Norm ISO 7810:2003 für eine Chipkarte voller Größe (full-size) vorgesehenen Abmessungen. Dies gilt zumindest bezüglich der Fläche der Vorrichtung. Die Abmessungen der Vorrichtung, insbesondere ihre Fläche, können aber nicht nur durch einen gängigen Standard für die Abmessungen von Chipkarten begrenzt sein, sondern die Geometrie der Vorrichtung kann auch völlig einer von einem solchen Standard für Chipkarten vorgeschriebenen Geometrie entsprechen oder völlig losgelöst von einem solchen Standard sein.

Chipkarten enthalten zumindest eine integrierte Schaltung (integrated circuit, IC), d.h. einen Chip, die auf einem Träger, insbesondere einem Kunststoffträger, angeordnet bzw. in diesen eingebettet ist. Die Schaltung kann beispielsweise einen Speicher umfassen. Der Speicher kann ein nichtflüchtiger Speicher sein. Bei dem Speicher kann es sich um einen Festwertspeicher (read-only memory, ROM), einen Flash-Speicher, einen EEPROM (electrically erasable programmable read-only memory), einen ferroelektrischen Speicher mit wahlfreiem Zugriff (ferroelectric random access memory, FRAM) oder Phasenwechselspeicher mit wahlfreiem Zugriff (phase-change random access memory, PCRAM) handeln, um nur einige Beispiele zu nennen. Zusätzlich oder alternativ kann die Schaltung einen flüchtigen Speicher, z.B. einen flüchtigen Speicher mit wahlfreiem Zugriff (random access memory, RAM), enthalten. Weitere Beispiele einer Schaltung umfassen eine einfache Logik oder einen Prozessor. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), anwendungsspezifische integrierte Schaltungen (application specifc integrated circuit, ASIC) oder Field Programmable Gate Arrays (FPGAs) verstanden werden.

Chipkarten sind in unterschiedlichsten Bauformen bekannt. Eine mögliche Bauform ist eine SIM-Karte (SIM = subscriber identity module) sein. Von dem Begriff "SIM-Karte" sind hier unterschiedliche Ausgestaltungen von SIM-Karten umfasst. Dazu gehören beispielsweise Mini-SIM-Karten, Micro-SIM-Karten und Nano-SIM-Karten. Die Chipkarte kann aber beispielsweise auch eine Bankkarten oder Telefonkarten sein und die für solche Chipkarten übliche Geometrie gemäß ISO 7816 ID-1 aufweisen.

Dass die Chipkarte für eine kontaktlose Kommunikation eingerichtet ist, kann bedeuten, dass sie zumindest eine Komponente beinhaltet, die für das Ermöglichen einer kontaktlosen Kommunikation mit der Chipkarte notwendig ist. Es müssen jedoch nicht sämtliche für die kontaktlose Kommunikation der Chipkarte notwendigen Komponenten von der Chipkarte umfasst sein. Beispielsweise kann die Chipkarte eine Steuerung, d.h. ein Controller, umfassen, der die kontaktlose Kommunikation der Chipkarte ermöglicht, während eine für die Kommunikation zusätzlich notwendige Antenne nicht Bestandteil der Chipkarte ist.

Dass die Kommunikation, für die die Chipkarte eingerichtet ist, eine kontaktlose Kommunikation ist, kann bedeuten, dass keine direkte physische Verbindung zwischen der Chipkarte und der ersten Hardwareschnittstelle vorhanden sein muss, damit die Chipkarte mit der ersten Hardwareschnittstelle kommunizieren kann. Die kontaktlose Kommunikation kann auch als drahtlos und berührungslos bezeichnet werden. Für die kontaktlose Kommunikation kann die Chipkarte beispielsweise einem der Standards ISO 10536, ISO 14443 oder ISO 15693 entsprechen. Die Kommunikation kann unidirektional oder bidirektional sein.

Der Begriff der Hardwareschnittstelle macht deutlich, dass die Schnittstelle sich von einer reinen Softwareschnittstelle, die beispielsweise zum Aufruf eines Programmbestandteils eines Computerprogramms dient (application programming interface, API), unterscheidet. Die erste Hardwareschnittstelle kann Hardwarekomponenten umfassen, die für eine kontaktlose Kommunikation mit der Chipkarte notwendig sind.

Einige der möglichen Beispiele einer ersten Hardwareschnittstelle sind eine Bluetooth-Schnittstelle, eine NFC-Schnittstelle, eine RFID-Schnittstelle, eine Schnittstelle zum einem drahtlosen lokalen Netzwerk (wireless local area network, WLAN), eine zertifizierte drahtlose USB-Schnittstelle (certified wireless USB, CWUSB) und eine Infrarotschnittstelle (IR).

Die erste Hardwareschnittstelle, ist eine Hardwareschnittstelle, welche gegenüber der Vorrichtung extern ist. Sie kann beispielsweise Bestandteil eines von der Vorrichtung verschiedenen Geräts sein. Ein Beispiel eines solchen Geräts ist ein PC (Personal Computer), z.B. ein Desktop-PC, ein Tablet-PCs oder andere Arten tragbarer PCs (Notebooks/Laptops). Mobiltelefone, z.B. Smartphones, persönliche digitale Assistenten (Personal Digital Assistant, PDA), Spielekonsolen, Set-Top-Boxen, elektronische Schlösser, z.B. Kraftfahrzeugschlösser oder Gebäudeschlösser, Geldautomaten und Terminals, z.B. Kreditkartenterminals, sind weitere Beispiele.

Die obigen Erläuterungen bezüglich der ersten Hardwareschnittstelle gelten auch bezüglich der zweiten Hardwareschnittstelle.

Die Einrichtung der Aufnahme, eine Chipkarte aufzunehmen kann umfassen, dass die Aufnahme an die Chipkarte angepasst ist. Insbesondere kann sie an die Geometrie der Chipkarte angepasst sein. Sind die Kommunikationsmittel der Vorrichtung und die Chipkarte eingerichtet, kontaktbehaftet miteinander zu kommunizieren, wenn die Chipkarte in der Aufnahme aufgenommen ist, kann die Aufnahme den Kontakten der Chipkarte entsprechende Kontakte aufweisen. Die Aufnahme kann beispielsweise auch eine Verrieglung umfassen, die sich in einem verriegelten Zustand befinden muss, damit Chipkarte und Kommunikationsmittel miteinander kommunizieren können - z.B. weil nur im verriegelten Zustand ein hinreichend guter Kontakt zwischen Kontakten der Aufnahme und Kontakten der Chipkarte besteht.

Zu den Kommunikationsmitteln der Vorrichtung können alle Komponenten der Vorrichtung gezählt werden, welche der kontaktlosen Kommunikation mit der zweiten Hardwareschnittstelle dienen.

Beispielsweise kann zu den Kommunikationsmitteln eine Antenne gehören, die für die Kommunikation mit der zweiten Hardwareschnittstelle benötigt wird. Ein weiteres Beispiel einer Komponente, die zu den Kommunikationsmitteln zählen kann, ist ein Controller. Dieser kann z.B. die Funktion haben, beim Empfang von Daten von der zweiten Hardwareschnittstelle, beispielsweise über eine Antenne der Kommunikationsmittel, entsprechend des von der zweiten Hardwareschnittstelle verwendeten Protokolls eine über die zweite Hardwareschnittstelle übertragene Nutzinformation (payload) aus den empfangene Daten zu extrahieren. Anderseits kann der Controller die Funktion haben, eine Nutzinformation entsprechend des Protokolls aufzubereiten, wenn diese von der Vorrichtung bzw. von einer aufgenommenen Chipkarte an die zweite Hardwareschnittstelle übermittelt werden soll. Zum Bewirken der eigentlichen Übertragung in Richtung der zweiten Hardwareschnittstelle kann der Controller beispielsweise ein entsprechendes Signal generieren und z.B. einer Antenne der Kommunikationsmittel zuführen, damit diese es sendet. Die Kommunikationsmittel können als eine zu der zweiten Hardwareschnittstelle korrespondierende Hardwareschnittstelle der Vorrichtung verstanden werden.

Dass die erste Hardwareschnittstelle und die zweite Hardwareschnittstelle Hardwareschnittstellen unterschiedlichen Typs sind, kann insbesondere beinhalten, dass die Kommunikationsmittel eingerichtet sind, lediglich eine Kommunikation mit der zweiten Hardwareschnittstelle zu ermöglichen, nicht aber eingerichtet sind, eine Kommunikation mit der ersten Hardwareschnittstelle zu ermöglichen. Die Kommunikationsmittel korrespondieren dann lediglich zu der zweiten Hardwareschnittstelle, nicht aber zu der ersten Hardwareschnittstelle. Entsprechend kann die Chipkarte eingerichtet sein, lediglich eine Kommunikation mit der ersten Hardwareschnittstelle zu ermöglichen, nicht aber eingerichtet sein, eine Kommunikation mit der zweiten Hardwareschnittstelle zu ermöglichen. Ist beispielsweise die erste Hardwareschnittstelle eine der oben beispielhaft erwähnten Hardwareschnittstellen (Bluetooth, NFC, RFID, WLAN, CWUSB, IR), kann die zweite Hardwareschnittstelle aufgrund ihres unterschiedlichen Typs eine andere der obigen Hardwareschnittstellen sein.

Dass die Kommunikationsmittel eingerichtet sind, eine Kommunikation der Kommunikationsmittel mit der Chipkarte zu ermöglichen, wenn diese in der Aufnahme aufgenommen ist, kann bedeuten, dass eine Kommunikation der zweiten Hardwareschnittstelle mit der Chipkarte unmittelbar über die Kommunikationsmittel erfolgen kann, ohne dass weitere Kommunikationskomponenten zwischengeschaltet werden müssen. Ein unmittelbarer Zugriff auf die Chipkarte durch die Kommunikationsmittel ist möglich. Dies unterscheidet die Erfindung von Systemen, bei denen zwischen die Kommunikationsmittel und die Chipkarte z.B. ein Prozessor geschaltet ist, welcher beispielsweise auch andere Aufgaben als die Kommunikation mit der Chipkarte übernimmt, und der angesprochen werden muss, damit eine Kommunikation mit der Chipkarte erfolgen kann. Erfindungsgemäß kann dagegen mit der Chipkarte so kommuniziert werden, als sei sie selbst für die Kommunikation mit der zweiten Hardwareschnittstelle konzipiert. Für die zweite Hardwareschnittstelle ist nicht ersichtlich, dass die Chipkarte selbst nicht für die Kommunikation mit der zweiten Hardwareschnittstelle ausgelegt ist.

Dass die Kommunikationsmittel eingerichtet sind, eine Kommunikation der Kommunikationsmittel mit der Chipkarte zu ermöglichen, wenn diese in der Aufnahme aufgenommen ist, kann umfassen, dass seitens der Kommunikationsmittel sämtliche Komponenten für die Kommunikation mit der Chipkarte vorhanden sind - zumindest wenn eine leitende Verbindung zwischen der Chipkarte bzw. der Aufnahme und den Kommunikationsmitteln besteht, wie sie jedenfalls für die kontaktbehaftete Kommunikation mit der Chipkarte nötig sein kann. Beispielsweise können die Kommunikationsmittel einen Controller umfassen, welcher eingerichtet ist, mit der Chipkarte zu kommunizieren. Dieser Controller kann gleichzeitig eingerichtet sein, die kontaktlose Kommunikation mit der zweiten Hardwareschnittstelle zu ermöglichen. Alternativ kann zu diesem Zweck ein weiterer Controller von den Kommunikationsmitteln umfasst sein. Die Kommunikationsmittel können eingerichtet sein, sowohl ein Protokoll für die Kommunikation mit der zweiten Hardwareschnittstelle als auch ein Protokoll für die Kommunikation mit der Chipkarte zu beherrschen. Die Kommunikation kann einen unidirektionalen oder bidirektionalen Datenaustausch beinhalten.

Dass die Kommunikation der Kommunikationsmittel mit der Chipkarte möglicht ist, wenn diese in der Aufnahme aufgenommen ist, schließt ein, dass gegebenenfalls über ein bloßes Einlegen oder anderes Einführen der Chipkarte in die Aufnahme hinaus weitere Schritte ausgeführt werden müssen, bevor die Kommunikation zwischen Chipkarte und Kommunikationsmitteln möglich ist. Ein solcher Schritt kann beispielsweise das Verriegeln der Chipkarte in der Aufnahme sein, z.B. damit ein hinreichender Kontakt zwischen Chipkarte und Aufnahme entsteht.

Gemäß einem Ausführungsbeispiel ist die Chipkarte zu Sicherheitszwecken nutzbar.

Beispiele solcher Sicherheitszwecke sind unter anderem Identifikationszwecke und/oder Authentifizierungszwecke und/oder Verschlüsselungszwecke. Ist die Chipkarte zu Sicherheitszwecken nutzbar, kann sie auch als sicheres Element (secure element) bezeichnet werden.

Zum Beispiel kann in einem Speicher der Chipkarte eine einzigartige Kennung hinterlegt sein, die den Eigentümer der Chipkarte identifiziert und mit der er sich gegenüber einer anderen Entität authentisiert. Ein Einsatzgebiet hierfür ist beispielsweise die Zugangskontrolle zu Kraftfahrzeugen oder Gebäuden, wobei Zugang erst nach erfolgreicher Authentifikation gewährt wird, oder auch die Anmeldung an einem Computer. Die Chipkarte kann auch im Rahmen einer Zwei-Faktor-Authentifizierung einsetzbar sein, bei der z.B. neben der Chipkarte eine persönliche Identifikationsnummer (PIN) benötigt wird, wie etwa meist für die Nutzung von Geldautomaten erforderlich. Es existieren viele weitere Beispiele. Eine einzigartige Kennung kann aber beispielsweise auch zur elektronischen Signatur eines Dokuments verwendet werden. Bei der Kennung kann es sich beispielsweise um einen privaten Schlüssel des Eigentümers der Chipkarte handeln, der zusammen mit einem öffentlichen Schlüssel ein asymmetrisches Schlüsselpaar bildet. Das Schlüsselpaar kann z.B. ein RSA-Schlüsselpaar (RSA = Rivest, Shamir, Adleman) sein. Es kann aber beispielsweise auch ein geheimer Schlüssel auf der Chipkarte gespeichert sein, der für die symmetrische Verschlüsselung oder Entschlüsselung, z.B. von Dokumenten oder von einer Kommunikation, nutzbar ist. Auch ein gegebenenfalls von der Chipkarte umfasster Prozessor kann zu Sicherheitszwecken, insbesondere zu Identifikationszwecken und/oder zu Authentifizierungszwecken und/oder zu Verschlüsselungszwecken nutzbar sein. Beispielsweise kann der Prozessor Verschlüsselungsoperationen ausführen oder er kann Operation im Kontext eines Challenge-Response-Verfahrens an der Generierung der Anwort (response) auf die gestellte Aufgabe (challenge) beteiligt sein.

Gemäß einem Ausführungsbeispiel, bei dem die Chipkarte zu Sicherheitszwecken nutzbar ist, bildet die Vorrichtung ein Token, wenn die Chipkarte in der Aufnahme aufgenommen ist.

Ist die Chipkarte in der Aufnahme aufgenommen, kann, da die Chipkarte zu Sicherheitszwecken nutzbar ist, auch die erfindungsgemäße Vorrichtung als zu Sicherheitszwecken nutzbar betrachtet werden. Zu Sicherheitszwecken nutzbare, portable Vorrichtung, insbesondere solche, die zu Identifikationszwecken und/oder Authentifizierungszwecken nutzbar sind, werden als Token oder Sicherheitstoken bezeichnet. Token existieren in unterschiedlichsten Bauformen, die hier alle umfasst sind. Einige Beispiel solcher Bauformen sind z.B. die Ausgestaltung des Tokens als Schlüsselanhänger und Ausgestaltungen, welche denen üblicher Speichersticks, z.B. USB-Sticks (USB = Universal Serial Bus) ähneln.

Gemäß einem Ausführungsbeispiel ist die Chipkarte für eine kontaktbehaftete Kommunikation eingerichtet und die Vorrichtung ist eingerichtet, eine kontaktbehaftete Kommunikation mit der Chipkarte zu ermöglichen, wenn die Chipkarte in der Aufnahme aufgenommen ist.

Die kontaktbehaftete Kommunikation der Kommunikationsmittel mit der Chipkarte kann vorteilhaft sein, weil eine kontaktbehaftete Kommunikation im Vergleich zu einer kontaktlosen Kommunikation einfacher und sicherer durchführbar sein kann.

Da im Rahmen dieses Ausführungsbeispiels die Chipkarte sowohl für die kontaktlose Kommunikation mit einer ersten Hardwareschnittstelle eingerichtet ist als auch für die kontaktbehaftete Kommunikation eingerichtet ist, handelt es sich bei der Chipkarte in diesem Ausführungsbeispiel um eine sogenannte Dual-Interface-Chipkarte. Ein Beispiel einer derartigen Dual-Interface-Chipkarte ist eine Chipkarte, welche sowohl für die ISO 7816 konforme kontaktbehaftete Kommunikation als auch für die ISO 14443 konforme kontaktlose Kommunikation ausgerüstet ist. Die Einrichtung der Chipkarte für die kontaktbehaftete Kommunikation kann umfassen, dass die Chipkarte Kontakte aufweist, die von außen kontaktierbar sind, z.B. weil sie an einer Oberfläche der Chipkarte angeordnet sind. Die Einrichtung der Vorrichtung, eine kontaktbehaftete Kommunikation mit der Chipkarte zu ermöglichen, kann umfassen, dass seitens der Vorrichtung Kontakte für die Kontaktierung der Chipkarte vorhanden sind, z.B. in der Aufnahme der Vorrichtung, sowie dass eine leitende Verbindung zwischen den Kontakten der Vorrichtung und den Kommunikationsmitteln vorgesehen ist.

Gemäß einem Ausführungsbeispiel ist die kontaktlose Kommunikation, für die die Chipkarte eingerichtet ist, eine kontaktlose Kommunikation mit geringerer Reichweite als die Reichweite der kontaktlosen Kommunikation, die die Kommunikationsmitteln zu ermöglichen eingerichtet sind.

Aufgrund der unterschiedlichen Reichweiten ermöglichen die Kommunikationsmittel gegenüber der kontaktlosen Kommunikation, für die die Chipkarte selbst eingerichtet ist, eine größere Kommunikationsreichweite. Durch den Einsatz des Ausführungsbeispiels der erfindungsgemäßen Vorrichtung kann also die Kommunikation mit der Chipkarte über eine größere Distanz möglich werden.

Gemäß einem Ausführungsbeispiel ist die kontaktlose Kommunikation, für die die Chipkarte eingerichtet ist, eine passive Kommunikation und die kontaktlose Kommunikation, die die Kommunikationsmitteln zu ermöglichen eingerichtet sind, ist eine aktive Kommunikation.

Chipkarten, die für die kontaktlose Kommunikation eingerichtet sind, sind oftmals lediglich für die passive kontaktlose Kommunikation eingerichtet, weil dies mit geringerem Aufwand als die Einrichtung für die aktive Kommunikation möglich sein kann. Ein Grund hierfür ist, dass für die passive Kommunikation seitens der Chipkarte keine Energieversorgungsmittel, z.B. ein Kondensator oder eine Batterie, vorgesehen sein müssen. Reichweite und Übertragungsrate sind bei der passiven Kommunikation allerdings oftmals gegenüber der aktiven Kommunikation eingeschränkt. Sind die Kommunikationsmittel der erfindungsgemäßen Vorrichtung eingerichtet, eine aktive kontaktlose Kommunikation zu ermöglichen, kann somit durch den Einsatz der Vorrichtung die Kommunikation mit der Chipkarte über eine größere Distanz und mit höherer Übertragungsrate möglich werden.

Unter einer passiven Kommunikation kann hier insbesondere eine Kommunikation verstanden werden, bei der ein Kommunikationspartner für die Durchführung der Kommunikation keine eigene Energieversorgung benötigt. Er kann die für die Kommunikation notwendige Energie beispielsweise aus einem elektrischen Feld eines anderen Kommunikationspartners, der an eine Energieversorgung angebunden ist, beziehen. Beispiele von Kommunikationstechniken, die einen passiven Kommunikationspartner zulassen, umfassen NFC und RFID. Entsprechend kann unter einer aktiven Kommunikation eine Kommunikation verstanden werden, bei der beide Kommunikationspartner an eine Energieversorgung angebunden sein müssen, um die Kommunikation durchführen zu können.

Dass die Chipkarte für eine passive kontaktlose Kommunikation eingerichtet ist, bedeutet, dass die Chipkarte eingerichtet ist, bei der passiven Kommunikation die Rolle des passiven Kommunikationspartners einzunehmen.

Gemäß einem Ausführungsbeispiel umfasst die Vorrichtung Energieversorgungsmittel.

Durch die Energieversorgungsmittel kann erreicht werden, dass Kommunikationsmittel, die eingerichtet sind, die aktive kontaktlose Kommunikation mit der zweiten Hardwareschnittstelle zu ermöglichen, vorgesehen werden können und die Vorrichtung dennoch unabhängig von einer externen Energieversorgung bleibt, so dass sie eine autonome Vorrichtung darstellen kann.

Die Energieversorgungsmittel können beispielsweise einen Kondensator, eine Batterie, einen Akkumulator, oder eine Solarzelle umfassen. Die Energieversorgungsmittel können den Kommunikationsmitteln zugeordnet sein, insbesondere mit diesen verbunden sein. Es kann vorgesehen sein, dass die Vorrichtung für die Aufladung der Energieversorgungsmittel eingerichtet ist. Beispielsweise kann die Vorrichtung eine den Energieversorgungsmitteln zugeordnete Spule umfassen, über die den Energieversorgungsmitteln zur Aufladung per Induktion Energie zugeführt werden kann.

Gemäß einem Ausführungsbeispiel ist die kontaktlose Kommunikation, für die die Chipkarte eingerichtet ist, eine kontaktlose Kommunikation mit geringerer Übertragungsrate als die Übertragungsrate der kontaktlosen Kommunikation, die die Kommunikationsmitteln zu ermöglichen eingerichtet sind.

Aufgrund der unterschiedlichen Übertragungsraten ermöglichen die Kommunikationsmittel gegenüber der kontaktlosen Kommunikation, für die die Chipkarte selbst eingerichtet ist, eine größere Übertragungsrate. Durch den Einsatz des Ausführungsbeispiels der erfindungsgemäßen Vorrichtung kann also eine schnellere Kommunikation mit der Chipkarte möglich werden.

Gemäß einem Ausführungsbeispiel sind die Kommunikationsmittel eingerichtet, eine Bluetooth-Kommunikation mit der zweiten Hardwareschnittstelle zu ermöglichen.

Die zweite Hardwareschnittstelle kann im Kontext dieses Ausführungsbeispiels als Bluetooth-Schnittstelle bezeichnet werden. Die Kommunikationsmittel können als Bluetooth-Kommunikationsmittel bezeichnet werden. Bluetooth-Schnittstellen sind heutzutage an vielen Geräten unterschiedlichen Typs vorhanden. Beispielsweise verfügt ein großer Teil der Smartphones, Laptops und Tablet-PCs über eine Bluetooth-Schnittstelle. Durch die Vorrichtung gemäß dem Ausführungsbeispiel wird der Zugriff auf die Chipkarte mittels solcher Geräte möglich. Auf ein speziell für den Zugriff auf die Chipkarte konzipiertes Terminal kann dann verzichtet werden. Bluetooth bietet im Vergleich zu anderen kontaktlos arbeitenden Kommunikationstechnologien, z.B. NFC, eine höhere Übertragungsrate und eine größere Reichweite. Beispielsweise kann die Reichweite bis zu 100 m betragen und die Übertragungsrate bei mehreren MBit/s liegen.

Von dem Begriff der Bluetooth-Kommunikation ist hier die Kommunikation gemäß dem Bluetooth-Low-Energy-Standard (BLE) umfasst. Im Rahmen der Erfindung kann es vorteilhaft sein, die Kommunikationsmittel als Kommunikationsmittel für die Kommunikation entsprechend dem BLE-Standard einzurichten, da ein vergleichsweise geringer Energiebedarf der Kommunikationsmittel die Folge sein kann. Dieser kann eine kleinere Dimensionierung der Energieaufnahmekapazität der Energiespeichermittel ermöglichen, die für den Betrieb von Bluetooth-Kommunikationsmitteln seitens der Vorrichtung nötig sein können. Energiespeichermittel geringerer Energiespeicherkapazität können sich gegenüber Energiespeichermitteln größerer Energiespeicherkapazität durch geringere Abmessungen auszeichnen. Sie können daher einfacher in eine erfindungsgemäße Vorrichtung integrierbar sein. Bei Einsatz von BLE wird ferner kein Pairing benötigt, so dass der Zugriff mehrerer Systeme auf die Chipkarte möglich wird.

Gemäß einem Ausführungsbeispiel ist die kotaktlose Kommunikation, für die die Chipkarte eingerichtet ist, eine Nahfeldkommunikation (NFC).

Die erste Hardwareschnittstelle kann im Kontext dieses Ausführungsbeispiels als NFC-Schnittstelle bezeichnet werden. Die Nahfeldkommunikation ist eine Technik, für die bereits viele Chipkarten eingerichtet sind. Sie kann in verschiedenen Anwendungsbereichen Komfortvorteile bei der Benutzung mit sich bringen. Gleichzeitig kann mittels NFC eine passive Kommunikation erfolgen. Die erfindungsgemäße Chipkarte kann also für die passive kontaktlose Nahfeldkommunikation eingerichtet sein, d.h. bei der Nahfeldkommunikation die Rolle des passiven Kommunikationspartners einnehmen, so dass für die Nahfeldkommunikation keine Energie seitens der erfindungsgemäßen Vorrichtung bereitgestellt werden muss. Die Reichweite bei der Nahfeldkommunikation liegt oftmals lediglich in der Größenordnung einiger Zentimeter und die maximale Übertragungsrate bei unter 0,5 Mbit/s.

Es kann als besonders vorteilhaft betrachtet werden, wenn die Kommunikationsmittel eingerichtet sind, eine Bluetooth-Kommunikation mit der zweiten Hardwareschnittstelle zu ermöglichen, und wenn gleichzeitig die kotaktlose Kommunikation, für die die Chipkarte eingerichtet ist, eine Nahfeldkommunikation ist. Auf die Chipkarte kann dann mittels Nahfeldkommunikation zugegriffen werden, andererseits kann mit Hilfe der Vorrichtung der Zugriff per Bluetooth erfolgen. Eine Kommunikation mit der Chipkarte mit größerer Reichweite und höherer Übertragungsrate als bei der Nahfeldkommunikation wird möglich. Nahfeldkommunikation und Bluetooth-Kommunikation können sich besonders gut ergänzen.

Beispielsweise kann dann die Vorrichtung genutzt werden, um die Chipkarte mittels Bluetooth-Kommunikation zu initialisieren oder zu personalisieren. Software kann per Bluetooth-Kommunikation auf der Chipkarte installiert, konfiguriert oder gelöscht werden. Auch das Sperren oder Entsperren der Chipkarte, eine Guthabenaufladung oder eine Abfrage des Status der Chipkarte kann per Bluetooth erfolgen. All diese Aktionen können also drahtlos Over-the-Air (OTA) durchgeführt werden. Andere alltägliche Nutzungen der Chipkarte, z.B. bei Bezahlanwendungen, Zugangskontrollanwendungen und elektronischen Fahrkarten- oder Eintrittskartenanwendungen, können dagegen mittels Nahfeldkommunikation erfolgen. Die Bluetooth-Kommunikation kann jedoch auch im Rahmen der obigen Anwendungsfälle verwendet werden. Bildet die Vorrichtung ein Token, wenn die Chipkarte in der Aufnahme aufgenommen ist, kann die Tokenfunktionalität nicht nur über NFC sondern auch über Bluetooth nutzbar sein, z.B. kann mittels des Tokens über eine Bluetooth-Kommunikation eine elektronische Signatur erfolgen, eine Authentifizierung durchgeführt werden, eine Transaktion genehmigt werden, eine Bezahlung getätigt werden oder es können Daten verschlüsselt oder entschlüsselt werden. Ebenso können die oben im Zusammenhang mit der Nutzung über Bluetooth aufgezählten Funktionalitäten und Anwendungen gleichermaßen über NFC nutzbar sein. Generell ist die Auflistung der Funktionalitäten und Anwendungen an dieser Stelle keinesfalls abschließend, sondern es existieren zahlreiche weitere Beispiele, die hier nur aus Gründen der Übersichtlichkeit nicht genannt sind.

Gemäß einem Ausführungsbeispiel umfasst die Vorrichtung Zusatzkommunikationsmittel, die eingerichtet sind, die kotaktlose Kommunikation der Chipkarte mit der ersten Hardwareschnittstelle zu ermöglichen.

Die Chipkarte kann für die kontaktlose Kommunikation mit der ersten Hardwareschnittstelle eingerichtet sein, ohne alle für diese Kommunikation nötigen Mittel zu umfassen. Die Zusatzkommunikationsmittel können die Einrichtung der Chipkarte für die kontaktlose Kommunikation mit der ersten Hardwareschnittstelle ergänzen und so die Kommunikation mit der ersten Hardwareschnittstelle ermöglichen. Die Zusatzkommunikationsmittel müssen dann nicht gegenüber Chipkarte und erfindungsgemäßer Vorrichtung extern zur Verfügung gestellt werden.

Die Zusatzkommunikationsmittel können beispielsweise eine Antenne umfassen, die für die Kommunikation der Chipkarte mit der ersten Hardwareschnittstelle notwendig ist, aber nicht von der Chipkarte selbst umfasst ist. Ein für die Kommunikation der Chipkarte mit der ersten Hardwareschnittstelle notwendiger Controller kann dagegen seitens der Chipkarte vorgesehen sein und die Einrichtung der Chipkarte für die kontaktlose Kommunikation mit der ersten Hardwareschnittstelle ausmachen.

Gemäß einem Ausführungsbeispiel sind die Zusatzkommunikationsmittel zumindest teilweise deaktivierbar.

Durch zumindest teilweise Deaktivierung der Zusatzkommunikationsmittel kann die Kommunikation der ersten Hardwareschnittstelle mit der Chipkarte unterbunden werden. Dies kann Sicherheitsvorteile bieten, da dann ein Zugriff auf die Chipkarte über die erste Hardwareschnittstelle ausgeschlossen ist.

Die zumindest teilweise gegebene Deaktivierbarkeit der Zusatzkommunikationsmittel kann hier bedeuten, dass im deaktivierten Zustand die Zusatzkommunikationsmittel nicht nutzbar sind, so dass eine Kommunikation der Chipkarte mit der ersten Hardwareschnittstelle nicht möglich ist. Die Deaktivierbarkeit kann beispielsweise durch einen von der erfindungsgemäßen Vorrichtung umfassten Schalter gegeben sein. Dieser kann eingerichtet sein, eine Verbindung zwischen der Chipkarte und den Zusatzkommunikationsmitteln herzustellen oder zu unterbrechen, so dass im unterbrochenen Zustand die Zusatzkommunikationsmittel nicht nutzbar sind. Es kann aber auch eine elektronische Komponente der Zusatzkommunikationsmittel ausgeschaltet werden, z.B. durch Trennung von einer Energieversorgung. Die Zusatzkommunikationsmittel können zumindest teilweise mechanisch deaktivierbar sein. Die mechanische Deaktivierbarkeit kann den Vorteil haben, dass die Deaktivierung und gegebenenfalls die Reaktivierung in einfacher Weise erfolgen können, insbesondere ohne besondere Kenntnisse des Bedieners. Zum Beispiel kann im Falle eines zur Deaktivierung/Reaktivierung vorgesehenen Schalters ein mechanisch betätigbares Betätigungselement vorgesehen sein, mittels dessen der Schalter vom einen in der anderen Schaltzustand überführbar ist.

Gemäß einem Ausführungsbeispiel ist die Chipkarte in der Vorrichtung aufgenommen.

Zum Beispiel ist die Chipkarte dauerhaft in der Vorrichtung aufgenommen. Beispielsweise ist die Chipkarte dauerhaft in der Aufnahme (und somit dauerhaft in der Vorrichtung) aufgenommen. Zum Beispiel bilden die Vorrichtung und die dauerhaft in der Vorrichtung aufgenommene Chipkarte, wie oben beschrieben, ein Token, insbesondere ein Sicherheitstoken.

Die Chipkarte soll beispielsweise als dauerhaft in der Aufnahme aufgenommen verstanden werden, wenn sie unlösbar mit der Aufnahme verbunden ist. Eine unlösbare Verbindung ist nur durch Zerstören trennbar. Beispiele für unlösbare Verbindungen sind Klebeverbindungen, Lötverbindungen, Schweißverbindungen, Bondverbindungen und Nietverbindungen.

Sind die Kommunikationsmittel der Vorrichtung und die Chipkarte, wie oben beschrieben, eingerichtet, kontaktbehaftet miteinander zu kommunizieren, wenn die Chipkarte in der Aufnahme aufgenommen ist, kann die Aufnahme den Kontakten der Chipkarte entsprechende Kontakte aufweisen. Beispielsweise sind die Kontakte der Chipkarte mit den entsprechenden Kontakten der Aufnahme verlötet oder verklebt (z.B. durch elektrisch-leitfähigen Kleber), so dass die Chipkarte dauerhaft in der Aufnahme aufgenommen ist. Dies ist beispielsweise vorteilhaft, um einen möglichst guten elektrischen Kontakt zwischen der Chipkarte und der Vorrichtung sicherzustellen und eine Trennung der Chipkarte und der Vorrichtung zu verhindern.

Als Aufnahme soll beispielsweise der Bauraum der Vorrichtung verstanden werden, der eingerichtet ist, die Chipkarte aufzunehmen. Zum Beispiel sind in diesem Bauraum keine weiteren Elemente der Vorrichtung angeordnet, so dass die Chipkarte darin aufnehmbar ist. Zum Beispiel kann die Vorrichtung eine Platine mit Kontakten zum Kontaktieren der Chipkarten umfassen. Beispielsweise soll der Bauraum der Vorrichtung, in dem sich die Chipkarte befindet, wenn die Kontakte der Chipkarte mit den entsprechenden Kontakten auf der Platine verbunden sind, als Aufnahme verstanden werden. Zum Beispiel sind in diesem Bauraum keine weiteren Elemente auf der Platine angeordnet.

Gemäß einem Ausführungsbeispiel ist die Vorrichtung Teil eines Fahrzeugschlüssels. Zum Beispiel ist die Vorrichtung als Fahrzeugschlüssel ausgebildet und/oder als Komponente in einem Fahrzeugschlüssel angeordnet.

Zum Beispiel ist die Vorrichtung mit der Chipkarte eingerichtet, den Eigentümer der Vorrichtung, den Benutzer der Vorrichtung und/oder den Besitzer der Vorrichtung gegenüber einem Fahrzeugschließsystem zu authentisieren. Ferner ist die Vorrichtung mit der Chipkarte beispielsweise eingerichtet, den Eigentümer, den Benutzer und/oder den Besitzer der Vorrichtung gegenüber anderen Systemen wie einem Gebäudeschließsystem, einem Parkmanagementsystem, einem Backoffice-System und/oder einem Managementsystem zu authentisieren.

Zum Beispiel sind die Chipkarte und/oder die Zusatzkommunikationsmittel und/oder die Kommunikationsmittel für eine kontaktlose Kommunikation mit einem Fahrzeugschließsystem eines Fahrzeugs und/oder anderen Systemen eingerichtet. Zum Beispiel unterstützen die Chipkarte und/oder die Zusatzkommunikationsmittel, wie oben beschrieben, eine NFC-Kommunikation. Zum Beispiel unterstützen die Kommunikationsmittel, wie oben beschrieben, eine Bluetooth-Kommunikation. Dies ist beispielsweise vorteilhaft, um verschiedene Kommunikationsprotokolle zu unterstützen und somit eine möglichst hohe Kompatibilität mit einer Vielzahl von bestehenden anderen Systemen zu erreichen.

In einem Speicher der Chipkarte kann zum Beispiel eine einzigartige Kennung gespeichert sein, die den Eigentümer, den Benutzer und/oder den Besitzer der Chipkarte und/oder der Vorrichtung identifiziert und mit der er sich gegenüber dem Fahrzeugschließsystem authentisieren kann. Zum Beispiel wird die einzigartige Kennung unmittelbar durch die Chipkarte und/oder durch die Zusatzkommunikationsmittel und/oder durch die Kommunikationsmittel an das Fahrzeugschließsystem kommuniziert (z.B. gesendet). Beispielsweise wird ein Fahrzeug nur dann geöffnet und/oder eine Wegfahrsperre des Fahrzeugs nur dann deaktiviert, wenn das Fahrzeugschließsystem den Eigentümer der Vorrichtung durch die einzigartige Kennung als berechtigt zum Öffnen des Fahrzeugs erkennt.

Im Gegensatz zu mechanischen Fahrzeugschlüsseln, ist dies beispielsweise vorteilhaft, wenn der Fahrzeugschlüssel, von dem die Vorrichtung ein Teil ist, nicht nur zur Authentisierung gegenüber einem Fahrzeug sondern gegenüber mehreren Fahrzeugen (z.B. mehreren Fahrzeugen einer Fahrzeugflotte eines Car-Sharing Anbieters) dienen soll. Zum Beispiel kann die einzigartige Kennung in allen Fahrzeugschließsystemen der Fahrzeuge einprogrammiert sein, so dass die Benutzergruppe der Fahrzeuge durch eine Anpassung der Programmierung problemlos erweitert und verkleinert werden kann.

Zum Beispiel kann sich der Eigentümer, der Besitzer und/oder der Benutzer der Chipkarte und/oder der Vorrichtung mit der einzigartigen Kennung auch gegenüber einem oder mehreren anderen Systemen authentisieren. Alternativ kann in einem Speicher der Chipkarte zumindest eine weitere einzigartige Kennung gespeichert sein, die den Eigentümer der Chipkarte identifiziert und mit der er sich gegenüber den anderen Systemen authentisieren kann. Zum Beispiel wird die einzigartige Kennung unmittelbar durch die Chipkarte und/oder durch die Zusatzkommunikationsmittel und/oder durch die Kommunikationsmittel an die anderen System kommuniziert (z.B. gesendet).

Dies ist beispielsweise vorteilhaft, um eine möglichst effiziente Verwendung der Vorrichtung in verschiedenen Anwendungsgebieten zu ermöglichen. Zum Beispiel kann die Vorrichtung von dem Eigentümer der Vorrichtung, dem Benutzer der Vorrichtung und/oder dem Besitzer der Vorrichtung nicht nur zur Authentisierung gegenüber einem Fahrzeugschließsystem sondern auch zum Bezahlen (beispielsweise von Parktarifen) verwendet werden.

Die einzigartige Kennung kann beispielsweise einer Person oder einer Gruppe von Personen zugeordnet werden. Ein Beispiel für eine einzigartige Kennung ist beispielsweise ein Benutzerzertifikat und/oder ein oder mehrere Schlüssel. Wie oben beschrieben, kann es sich bei der Kennung beispielsweise um einen privaten Schlüssel des Eigentümers der Chipkarte handeln, der zusammen mit einem öffentlichen Schlüssel ein asymmetrisches Schlüsselpaar bildet. Es kann aber beispielsweise auch ein geheimer Schlüssel auf der Chipkarte gespeichert sein, der für die symmetrische Verschlüsselung oder Entschlüsselung, z.B. von Dokumenten oder von einer Kommunikation, nutzbar ist. Auch ein gegebenenfalls von der Chipkarte umfasster Prozessor kann zu Sicherheitszwecken, insbesondere zu Identifikationszwecken und/oder zu Authentifizierungszwecken und/oder zu Verschlüsselungszwecken nutzbar sein. Beispielsweise kann der Prozessor Verschlüsselungsoperationen ausführen oder er kann Operation im Kontext eines Challenge-Response-Verfahrens an der Generierung der Anwort (response) auf die gestellte Aufgabe (challenge) beteiligt sein.

Gemäß einem Ausführungsbeispiel wird Vorrichtung zum Authentisieren gegenüber einem Fahrzeugschließsystem verwendet.

Nachfolgend werden Ausführungsbeispiele der Erfindung anhand von vier Figuren erläutert. Dabei zeigen
- Fig. 1: eine schematische Darstellung eines Ausführungsbeispiels einer erfindungsgemäßen Vorrichtung;
- Fig. 2a: eine schematische Darstellung eines Beispiels einer Chipkarte, die in einer Aufnahme der Vorrichtung aus Fig. 1 aufnehmbar ist;
- Fig. 2b: eine schematische Darstellung von Komponenten im Inneren der Chipkarte aus Fig. 2a;
- Fig. 3: eine schematische Darstellung der Vorrichtung aus Fig. 1, wobei die Chipkarte aus Fig. 2a und Fig. 2b in der Aufnahme aufgenommen ist, im Kontext eines Beispiels einer Umgebung für die Anwendung von Vorrichtung und Chipkarte.

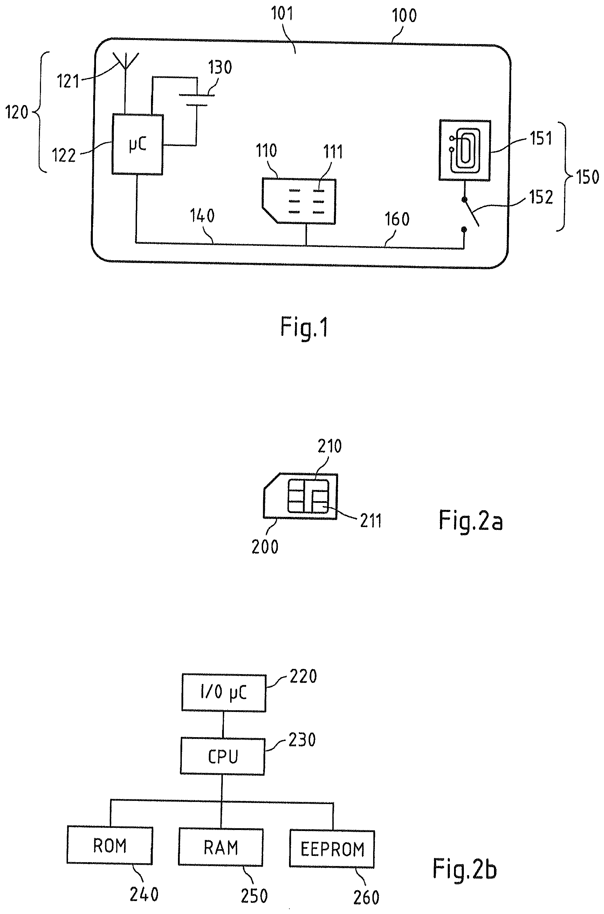

Fig. 1 zeigt eine schematische Darstellung eines Ausführungsbeispiels einer erfindungsgemäßen Vorrichtung 100.

Die Vorrichtung 100 verfügt über eine Aufnahme 110 für eine Micro-SIM-Karte, nachfolgend lediglich als SIM-Karte bezeichnet. In der Aufnahme 110 sind Kontakte 111 angeordnet, die die Kontakte einer SIM-Karte kontaktieren, wenn die SIM-Karte in der Aufnahme 110 aufgenommen ist. Die Vorrichtung 100 umfasst zudem Bluetooth-Kommunikationsmittel 120. Diese sind für die Kommunikation gemäß dem Bluetooth-Low-Energy-Standard ausgelegt. Die Bluetooth-Kommunikationsmittel 120 umfassen eine Bluetooth-Antenne 121 und einen Mikrocontroller 122. Zur Energieversorgung des Mikrocontrollers 122 ist eine Batterie 130 vorgesehen. Die Batterie 130 ist eine Einwegbatterie. Alternativ kann aber auch eine wiederaufladbare Batterie eingesetzt werden. Zum Wiederaufladen der Batterie kann dann die Vorrichtung 100 eine Spule umfassen (nicht gezeigt), mittels derer die Batterie induktiv aufgeladen werden kann. Die Bluetooth-Kommunikationsmittel 120 sind mit den Kontakten 111 der Aufnahme 110 über eine Verbindung 140 verbunden. Die Vorrichtung 100 umfasst zudem NFC-Kommunikationsmittel 150. Zu diesen gehören eine NFC-Antenne 151 und ein Schalter 152.

Der Schalter 152 kann über einen Schieber (nicht gezeigt) mechanisch betätigt werden. In geschlossenem Zustand des Schalters 152 ist die NFC-Antenne 151 über einen Verbindung 160 mit den Kontakten 111 der Aufnahme 110 verbunden. Mittels der Bluetooth-Kommunikationsmittel 120 wird eine Kommunikation einer in der Aufnahme 110 aufgenommenen SIM-Karte mit einer Bluetooth-Schnittstelle ermöglicht. Entsprechend der Bluetooth-Technologie erfolgt diese Kommunikation kontaktlos. Mittels der NFC-Kommunikationsmittel 150 wird bei geschlossenem Schalter 152 eine ebenfalls kontaktlose Kommunikation einer in der Aufnahme 110 aufgenommenen SIM-Karte mit einer NFC-Schnittstelle ermöglicht. Anzeigemittel oder Benutzereingabemittel sind von der Vorrichtung 100 nicht umfasst.

Die Komponenten der Vorrichtung 100 - einschließlich des Mikrocontrollers 122 als eine integrierte Schaltung - sind in einen Kunststoffträger 101 integriert.

Fig. 2a zeigt eine schematische Darstellung eines Beispiels einer Micro-SIM-Karte 200, die in der Aufnahme 110 der Vorrichtung 100 aus Fig. 1 aufnehmbar ist. Die SIM-Karte 200 besitzt auf einer Oberfläche eine Kontaktfläche 210, die mehrere Kontakte 211 aufweist.

Fig. 2b zeigt eine schematische Darstellung von Komponenten im Inneren der Chipkarte 200 aus Fig. 2a.

Die Chipkarte 200 umfasst einen Eingabe/Ausgabe-Mikrocontroller (I/O µC) 220, einen Prozessor (central processing unit, CPU) 230, einen ROM 240, einen RAM 250 und ein EEPROM 260. Statt des EEPROMs 260 oder zusätzlich dazu könnte beispielsweise auch ein Flash-Speicher vorgesehen sein. Der Mikrocontroller 220 ist mit dem Prozessor 230 verbunden, so dass ein Datenaustausch zwischen Mikrocontroller 220 und Prozessor 230 möglich ist. Der Prozessor 230 ist ferner mit dem ROM 240, dem RAM 250 und dem EEPROM 260 verbunden, so dass er auf diese Komponenten zugreifen kann. Bei der SIM-Karte 200 handelt es sich um eine sogenannte Dual-Interface-Chipkarte, welche sowohl für die kontaktbehaftete Kommunikation gemäß ISO 7816 als auch für die kontaktlose Kommunikation gemäß ISO 14443 eingerichtet ist. Dazu wurde der Mikrocontroller 220 entsprechend ausgestaltet und es wurde eine Verbindung des Mikrocontrollers 220 zu den Kontakten 211 der SIM-Karte 200 vorgesehen.

In dem ROM 240 ist eine einzigartige, vom Hersteller vorgegebene Kennung der SIM-Karte 200 gespeichert. Zum Ausführen eines Softwareprogramms auf dem Prozessor 230 wird der Programmcode zunächst in den RAM 250 geladen. Ebenso werden während der Programmausführung Operanden in dem RAM 250 abgelegt. Softwareprogramme und Daten, die der Benutzer auf der SIM-Karte 200 ablegt, werden in dem EEPROM 260 gespeichert. Die Anbindung des ROM 240, des RAM 250 und des EEPROM 260 an den Mikrocontroller 220 ist über den Prozessor 230 realisiert.

Die SIM-Karte 200 ist zu Sicherheitszwecken nutzbar. Sie kann daher auch als sicheres Element (secure element) bezeichnet werden. Beispielsweise kann sie zu Identifikationszwecken und/oder Authentifizierungszwecken und/oder zu Verschlüsselungszwecken nutzbar sein. Zum Beispiel kann die in dem ROM 240 gespeicherte, einzigartige, vom Hersteller vorgegebene Kennung der SIM-Karte 200 zur Zugangskontrolle verwendet werden, indem sie von der SIM-Karte 200 zu einem entsprechenden Zugangsterminal übertragen wird. Auf ähnliche Weise kann sie beispielsweise auch genutzt werden, um Zugang zu einem Computer zu erlangen. Ebenso kann sie z.B. zusammen mit einer PIN zur Zwei-Faktor-Authentifizierung verwendet werden, z.B. um an einem Geldautomaten eine Auszahlung zu veranlassen. Gemäß einem anderen Beispiel kann ein privater Schlüssel eines RSA-Schlüsselpaars in dem EEPROM 260 gespeichert sein, und zum elektronischen Signieren von Dokumenten verwendet werden. Es kann aber auch ein geheimer Schlüssel für die symmetrisch Verschlüsselung oder Entschlüsselung auf der SIM-Karte 200 gespeichert sein. Im Rahmen eines anderen Beispiels kann der Prozessor 230, wenn er ein im EEPROM 260 gespeichertes Computerprogramm ausführt, eine Verschlüsselungs- bzw. Entschlüsselungsoperation vornehmen oder im Kontext eines Challenge-Response-Verfahrens an der Generierung der Anwort (response) beteiligt sein.

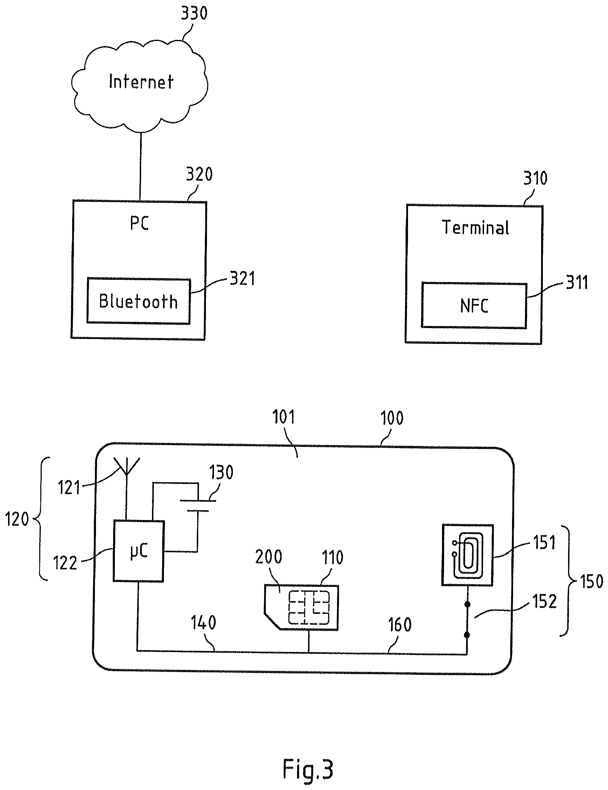

Fig. 3 zeigt eine schematische Darstellung der Vorrichtung 100 aus Fig. 1, wobei die SIM-Karte 200 aus Fig. 2a und Fig. 2b in der Aufnahme 110 aufgenommen ist, im Kontext eines Beispiels einer Umgebung für die Anwendung von Vorrichtung 100 und SIM-Karte 200.

Die Kontakte 211 der SIM-Karte 200 liegen an den Kontakten 111 der Aufnahme 110 an. Die Aufnahme 110 kann eine Verriegelung umfassen (in Fig. 3 nicht dargestellt), die in einem verriegelten Zustand für einen guten Kontakt zwischen den Kontakten 111 und der den Kontakten 211 der SIM-Karte 200 sorgen. Wie vorstehend erläutert, ist die SIM-Karte 200 zu Sicherheitszwecken nutzbar, so dass die Vorrichtung 100 ein Token bildet, wenn die SIM-Karte 200 in der Aufnahme 110 aufgenommen ist. Im Unterschied zu Fig. 1a ist in Fig. 3 der Schalter 152 geschlossen, so dass in Fig. 3 eine Anbindung der NFC-Antenne 151 and die Kontakte 111 der Aufnahme 110 und damit an die SIM-Karte 200 gegeben ist.

In Fig. 3 sind ein gegenüber der Vorrichtung 100 externes Terminal 310 und ein ebenfalls gegenüber der Vorrichtung 100 externer PC 320 gezeigt. Das Terminal 310 umfasst eine NFC-Hardwareschnittstelle 311. Der PC 320 umfasst eine Bluetooth-Hardwareschnittstelle 321. Der PC 320 ist an das Internet 330 angebunden. Anders als in Fig. 3 dargestellt, kann natürlich auch das Terminal 310 an das Internet 330 angebunden sein. Das Terminal 310 und der PC 320 stehen hier stellvertretend für andere Geräte, die entsprechende Hardwareschnittstellen umfassen können.

Der Mikrocontroller 122 der Bluetooth-Kommunikationsmittel 120 ist sowohl für die Bluetooth-Kommunikation eingerichtet als auch für die kontaktbehaftete Kommunikation mit einer SIM-Karte. Er beherrscht Protokolle zur Bluetooth-Kommunikation und zur kontaktbehafteten Kommunikation mit SIM-Karten. Außerdem kann er jeweils entsprechende elektrische Ausgangssignale generieren und auch verarbeiten. Die elektrische Verbindung zwischen der SIM-Karte 200 und den Bluetooth-Kommunikationsmitteln 120 ist über die Kontakte 111 und die Verbindung 140 gewährleistet. Somit ist die Vorrichtung 100 also eingerichtet, eine kontaktbehaftete Kommunikation mit der SIM-Karte 200 zu ermöglichen, wenn die SIM-Karte 200 in der Aufnahme 110 aufgenommen ist. Durch die die kontaktbehaftete Anbindung der SIM-Karte 200 an die Bluetooth-Kommunikationsmittel 120 ist mit geringem Implementierungsaufwand eine sichere Kommunikation zwischen der SIM-Karte 200 und den Bluetooth-Kommunikationsmitteln 120 verwirklicht.

Die NFC-Kommunikationsmittel 150 bilden gegenüber den Bluetooth-Kommunikationsmitteln 120 Zusatzkommunikationsmittel. Ist der Schalter 152 geschlossen und die SIM-Karte 200 in der Aufnahme 110 aufgenommen, ist die SIM-Karte an die NFC-Antenne 151 angebunden. Die NFC-Antenne ermöglicht dann die kontaktlose Kommunikation der SIM-Karte 200 mit der NFC-Schnittstelle 311. Ein Abkoppeln der NFC-Antenne 151 von der Aufnahme 110 und damit von der SIM-Karte 200 kann in einfacher Weise erfolgen. Dazu muss lediglich durch mechanisch der Schalters 152 in den geöffneten Zustand überführt werden. Die NFC-Antenne 151 ist dann nicht mehr nutzbar, d.h. sie ist deaktiviert. Eine unerwünschte NFC-Kommunikation zwischen dem Terminal 310 bzw. seiner NFC-Schnittstelle 311 und der SIM-Karte 200 ist dann ausgeschlossen. Die Sicherheit ist gesteigert.

Ist die SIM-Karte 200 in der Aufnahme 110 aufgenommen, kann die Vorrichtung 100 die Möglichkeiten zur Kommunikation mit der SIM-Karte 200 erweitern. Es kann nicht nur eine von der SIM-Karte 200 nativ unterstützte NFC-Kommunikation durchgeführt werden, sondern auch eine Bluetooth-Kommunikation mit der SIM-Karte 200 erfolgen.

Die Bluetooth-Kommunikation der Bluetooth-Schnittstelle 321 mit der SIM-Karte 200 kann unmittelbar über die Bluetooth-Kommunikationsmittel 120 erfolgen, ohne dass weitere Kommunikationskomponenten zwischengeschaltet werden müssen.

Grund ist, dass seitens der Bluetooth-Kommunikationsmittel 120 sämtliche Komponenten für die kontaktbehaftete Kommunikation mit der SIM-Karte 200 und die Bluetooth-Kommunikation mit der Bluetooth-Schnittstelle 321 vorhanden sind. Insbesondere beherrscht der Controller 122 Protokolle zur Bluetooth-Kommunikation und zur kontaktbehafteten Kommunikation mit SIM-Karten. Ein unmittelbarer Zugriff auf die SIM-Karte 200 durch die Bluetooth-Kommunikationsmittel 120 ist möglich. Mit der SIM-Karte 200 kann so kommuniziert werden, als sei sie selbst für die Kommunikation mit der Bluetooth-Schnittstelle 321 konzipiert. Für die Bluetooth-Schnittstelle 321 ist nicht ersichtlich, dass die SIM-Karte 200 selbst nicht für die Kommunikation mit der Bluetooth-Schnittstelle 321 ausgelegt ist.

NFC-Kommunikation und Bluetooth-Kommunikation ergänzen sich besonders gut. So sind Reichweite und Übertragungsrate der durch die Bluetooth-Kommunikationsmittel 120 ermöglichten Bluetooth-Kommunikation größer als bei der NFC-Kommunikation, für die die SIM-Karte 200 neben der kontaktbehafteten Kommunikation eingerichtet ist. Die NFC-Kommunikation hat dagegen den Vorteil, dass sie eine passive Kommunikation erlaubt, d.h. eine Kommunikation, bei der ein Kommunikationspartner für die Durchführung der Kommunikation keine eigene Energieversorgung benötigt. Vorliegend ist die SIM-Karte 200 für eine passive NFC-Kommunikation eingerichtet. Sie nimmt also bei der NFC-Kommunikation die Rolle des passiven Kommunikationspartners ein. Für die NFC-Kommunikation mit der NFC-Schnittstelle 311 wird seitens der SIM-Karte 200 bzw. der Vorrichtung 100 keine Energieversorgung benötigt. Die für die NFC-Kommunikation benötigte Energie wird bei der Kommunikation mit der NFC-Schnittstelle 311 des Terminals 310 aus einem von der NFC-Schnittstelle 311 erzeugten elektrischen Feld bezogen. Für die Bluetooth-Kommunikation, die eine aktive Kommunikation ist, so dass seitens aller beteiligten Kommunikationspartner eine Energieversorgung benötigt wird, versorgt die Batterie 130 den Mikrocontroller 121 der Bluetooth-Kommunikationsmittel 120. Die nötige Energiespeicherkapazität der Batterie 130 kann aber gegenüber einem Fall, indem neben einer Bluetooth-Kommunikation noch eine weitere aktive Kommunikation ermöglicht werden muss, reduziert sein. Ein reduzierter Bauraumbedarf kann die Folge sein. Aus gleichem Grund ist auch vorteilhaft, dass die Bluetooth-Kommunikationsmittel 120 für die Kommunikation gemäß BLE-Standard eingerichtet sind.

Terminals, die wie das Terminal 310 für die NFC-Kommunikation mit Chipkarten eingerichtet sind, werden in großer Zahl und für unterschiedlichste Zwecke eingesetzt. Eine kleine Auswahl von Beispielen sind Bezahlanwendungen, Zugangskontrollanwendungen und elektronische Fahrkarten- oder Eintrittskartenanwendungen. Im Rahmen solcher Anwendungen kann die SIM-Karte 200 mittels NFC-Kommunikation mit dem Terminal 310 interagieren. Ist die SIM-Karte 200 in der Aufnahme 110 der Vorrichtung 100 aufgenommen, kann auf sie zusätzlich per Bluetooth zugegriffen werden. Die Vorteile von Bluetooth gegenüber NFC hinsichtlich der Reichweite und der Übertragungsrate werden nutzbar. Hinzu kommt, dass Bluetooth-Schnittstellen wie die Schnittstelle 321 bei sehr vielen Geräten, wie z.B. PCs oder Smartphones, verfügbar sind.

Für Anwendungen, bei denen eine größere Reichweite und eine höhere Übertragungsrate von Vorteil sind, kann die Bluetooth-Kommunikation mit der SIM-Karte 200 genutzt werden. So kann Beispielsweise mittels des PCs 320 und seiner Bluetooth-Schnittstelle 321 eine Initialisierung, eine Personalisierung, ein Sperren oder ein Entsperren der SIM-Karte 200 erfolgen. Dabei können Anzeigemittel, z.B. ein Bildschirm, und Eingabemittel des PCs 320, z.B. eine Maus und eine Tastatur, für ein komfortables Interagieren mit der SIM-Karte 200 genutzt werden. Auch für die Installation von Software auf der SIM-Karte 200 und für die Konfiguration oder das Löschen dieser Software kann mit Hilfe der Vorrichtung 100 mittels des PCs 320 per Bluetooth auf die SIM-Karte 200 zugegriffen werden. Da der PC 320 an das Internet 330 angebunden ist, kann über das Internet 330, den PC 320 und die Vorrichtung 100 ein Fernzugriff auf die SIM-Karte 200 erfolgen. Ebenso können mittels des PCs 320 z.B. Software oder Mediendateien aus dem Internet 330 geladen und auf der SIM-Karte 200, insbesondere in dem EEPROM 260, gespeichert werden. Die hier im Zusammenhang mit der Nutzung über Bluetooth aufgezählten Funktionalitäten und Anwendungen können gleichermaßen über NFC nutzbar sein. Gleiches gilt für den umgekehrten Fall. Generell ist die Auflistung der Funktionalitäten und Anwendungen an dieser Stelle keinesfalls abschließend, sondern es existieren zahlreiche weitere Beispiele, die hier nur aus Gründen der Übersichtlichkeit nicht genannt sind.

Die Vorrichtung 100 ist portabel und kann autonom arbeiten. Für ihr Funktionieren ist die Vorrichtung 100 nicht auf eine externe Energieversorgung angewiesen, da die NFC-Kommunikation passiv erfolgen kann und mit der Batterie 130 für die Bluetooth-Kommunikationsmittel 120 eine Energieversorgung von der Vorrichtung 100 umfasst ist. Die Vorrichtung 100 umfasst alle Komponenten, die für das Ermöglichen der Bluetooth-Kommunikation und der NFC-Kommunikation mit der SIM-Karte 200 gebraucht werden. Aufgrund dieser Ausgestaltung, kann mit der Vorrichtung 100 die Erweiterung der Kommunikationsmöglichkeiten der SIM-Karte 200 vorgenommen werden, wobei die Vorrichtung 100 samt der SIM-Karte 200 ähnlich gut handhabbar ist wie die SIM-Karte 200 allein.

## Patentansprüche

1. Vorrichtung (100) umfassend:
- eine Aufnahme (110), die eingerichtet ist, eine Chipkarte (200) aufzunehmen, wobei die Chipkarte (200) für eine kontaktlose Kommunikation mit einer ersten Hardwareschnittstelle (311) eingerichtet ist,
- Kommunikationsmittel (120), die eingerichtet sind, eine kontaktlose Kommunikation mit einer zweiten Hardwareschnittstelle (321) zu ermöglichen, wobei die erste Hardwareschnittstelle (311) und die zweite Hardwareschnittstelle (321) Hardwareschnittstellen unterschiedlichen Typs sind, **dadurch gekennzeichnet, dass** die Kommunikationsmittel (120) eingerichtet sind, eine Kommunikation der Kommunikationsmittel (120) mit der Chipkarte (200) derart zu ermöglichen, wenn die Chipkarte (200) in der Aufnahme (110) aufgenommen ist, dass eine Kommunikation der zweiten Hardwareschnittstelle mit der Chipkarte unmittelbar über die Kommunikationsmittel erfolgen kann.

2. Vorrichtung (100) nach einem der vorherigen Ansprüche, wobei die Kommunikation der zweiten Hardwareschnittstelle mit der Chipkarte unmittelbar über die Kommunikationsmittel erfolgen kann, ohne dass weitere Kommunikationskomponenten zwischengeschaltet werden müssen.

3. Vorrichtung (100) nach einem der vorherigen Ansprüche, wobei ein Zugriff auf die Chipkarte über die zweite Hardwareschnittstelle und die Kommunikationsmittel derart möglich ist, als sei die Chipkarte für eine kontaktlose Kommunikation mit der zweiten Hardwareschnittstelle konzipiert.

4. Vorrichtung (100) nach einem der vorherigen Ansprüche, wobei die Chipkarte (200) zu Sicherheitszwecken nutzbar ist, und wobei die Vorrichtung (100) ein Token bildet, wenn die Chipkarte (200) in der Aufnahme (110) aufgenommen ist.

5. Vorrichtung (100) nach einem der vorherigen Ansprüche, wobei die Chipkarte (200) für eine kontaktbehaftete Kommunikation eingerichtet ist und die Kommunikationsmittel (120) eingerichtet sind, eine kontaktbehaftete Kommunikation mit der Chipkarte (200) zu ermöglichen, wenn die Chipkarte (200) in der Aufnahme (110) aufgenommen ist.

6. Vorrichtung (100) nach einem der vorherigen Ansprüche, wobei die kontaktlose Kommunikation, für die die Chipkarte (200) eingerichtet ist, eine kontaktlose Kommunikation mit geringerer Reichweite als die Reichweite der kontaktlosen Kommunikation, die die Kommunikationsmitteln (120) zu ermöglichen eingerichtet sind, ist.

7. Vorrichtung (100) nach einem der vorherigen Ansprüche, wobei die kontaktlose Kommunikation, für die die Chipkarte (200) eingerichtet ist, eine kontaktlose Kommunikation mit geringerer Übertragungsrate als die Übertragungsrate der kontaktlosen Kommunikation, die die Kommunikationsmitteln (120) zu ermöglichen eingerichtet sind, ist.

8. Vorrichtung (100) nach einem der vorherigen Ansprüche, wobei die kontaktlose Kommunikation, für die die Chipkarte (200) eingerichtet ist, eine passive Kommunikation ist und wobei die kontaktlosen Kommunikation, die die Kommunikationsmitteln (120) zu ermöglichen eingerichtet sind, eine aktive Kommunikation ist.

9. Vorrichtung (100) nach einem der vorherigen Ansprüche, wobei die Vorrichtung (100) Energieversorgungsmittel (130) umfasst.

10. Vorrichtung (100) nach einem der vorherigen Ansprüche, wobei die Kommunikationsmittel (120) eingerichtet sind, eine Bluetooth-Kommunikation mit der zweiten Hardwareschnittstelle (321) zu ermöglichen, und/oder wobei die kontaktlose Kommunikation, für die die Chipkarte (200) eingerichtet ist, eine Nahfeldkommunikation ist.

11. Vorrichtung(100) nach einem der vorherigen Ansprüche, wobei die Vorrichtung (100) Zusatzkommunikationsmittel (150) umfasst, die eingerichtet sind, die kontaktlose Kommunikation der Chipkarte (200) mit der ersten Hardwareschnittstelle (311) zu ermöglichen.

12. Vorrichtung (100) nach Anspruch 11, wobei die Zusatzkommunikationsmittel (150) zumindest teilweise deaktivierbar sind.

13. Vorrichtung (100) nach einem der vorherigen Ansprüche, wobei die Chipkarte (200) in der Vorrichtung (100) aufgenommen ist.

14. Vorrichtung (100) nach einem der vorherigen Ansprüche, wobei die Vorrichtung Teil eines Fahrzeugschlüssels ist.

15. Verwenden der Vorrichtung nach einem der vorherigen Ansprüche zum Authentisieren gegenüber einem Fahrzeugschließsystem.

## Claims

1. Apparatus (100) comprising:
- a receiving member (110) configured to receive a chip card (200), wherein said chip card (200) is configured for contactless communication with a first hardware interface (311),
- communication means (120) configured to enable contactless communication with a second hardware interface (321), wherein said first hardware interface (311) and said second hardware interface (321) are hardware interfaces of different types,
**characterized in that**
said communication means (120) are configured to enable communication of said communication means (120) with said chip card (200) such that, when said chip card (200) is received in said receiving member (110), a communication of said second hardware interface with said chip card can be carried out directly via said communication means.

2. Apparatus (100) according to any one of the preceding claims, wherein said communication of said second hardware interface with said chip card can be carried out directly via said communication means, without additional communication components having to be connected in between.

3. Apparatus (100) according to any one of the preceding claims, wherein access to said chip card via said second hardware interface and said communication means is possible as if said chip card were itself designed for communication with said second hardware interface.

4. Apparatus (100) according to any one of the preceding claims, wherein said chip card (200) is useable for security purposes, and wherein said apparatus (100) forms a token when said chip card (200) is received in said receiving member (110).

5. Apparatus (100) according to any one of the preceding claims, wherein said chip card (200) is configured for contact-based communication and said communication means (120) are configured to enable contact-based communication with said chip card (200) when said chip card (200) is received in said receiving member (110).

6. Apparatus (100) according to any one of the preceding claims, wherein said contactless communication for which said chip card (200) is configured is a contactless communication having a smaller range than said range of said contactless communication which said communication means (120) are configured to enable.

7. Apparatus (100) according to any one of the preceding claims, wherein said contactless communication for which said chip card (200) is configured is a contactless communication having a smaller transmission rate than said transmission rate of said contactless communication which said communication means (120) are configured to enable.

8. Apparatus (100) according to any one of the preceding claims, wherein said contactless communication for which said chip card (200) is configured is a passive communication and wherein said contactless communication which said communication means (120) are configured to enable is an active communication.

9. Apparatus (100) according to any one of the preceding claims, wherein said apparatus (100) comprises energy supply means (130).

10. Apparatus (100) according to any one of the preceding claims, wherein said communication means (120) are configured to enable a Bluetooth communication with said second hardware interface (321), and/or wherein said contactless communication for which said chip card (200) is configured is a near field communication.

11. Apparatus (100) according to any one of the preceding claims, wherein said apparatus (100) comprises additional communication means (150) configured to enable said contactless communication of said chip card (200) with said first hardware interface (311).

12. Apparatus (100) according to claim 11, wherein said additional communication means (150) are at least partially deactivatable.

13. Apparatus (100) according to any one of the preceding claims, wherein said chip card (200) is received in said apparatus (100).

14. Apparatus (100) according to any one of the preceding claims, wherein said apparatus (100) is part of a vehicle key.

15. Use of the apparatus according to any one of the preceding claims for authentication to a vehicle locking system.

## Revendications

1. Dispositif (100) comprenant:
- un réceptacle (110), qui est aménagé pour recevoir une carte à puce (200), sachant que la carte à puce (200) est aménagée pour une communication sans contact avec une première interface matérielle (311),
- des moyens de communication (120), qui sont aménagés pour permettre une communication sans contact avec une deuxième interface matérielle (321), sachant que la première interface matérielle (311) et la deuxième interface matérielle (321) sont des interfaces de type différent.
**caractérisé en ce que** les moyens de communication (120) sont aménagés pour permettre une communication des moyens de communication (120) avec la carte à puce (200), de sorte que, quand la carte à puce (200) est introduite dans le réceptacle (110), une communication de la deuxième interface matérielle avec la carte à puce puisse être effectuée directement per les moyens de communication.

2. Dispositif (100) selon l'une des revendications précédentes, sachant que la communication de la deuxième interface matérielle avec la carte à puce peut s'effectuer directement par l'intermédiaire des moyens de communication, sans que d'autres composants de communication doivent être interconnectés.

3. Dispositif (100) selon l'une des revendications précédentes, sachant qu'il est possible d'accéder à la carte à puce par l'intermédiaire de la deuxième interface matérielle et des moyens de communication comme si la carte à puce était conçue pour une communication sans contact avec la deuxième interface matérielle.

4. Dispositif (100) selon l'une des revendications précédentes, sachant que la carte à puce (200) peut être utilisée dans des buts de sécurité, et sachant que le dispositif (100) forme un jeton quand la carte à puce (200) est introduite dans le réceptacle (110).

5. Dispositif (100) selon l'une des revendications précédentes, sachant que la carte à puce (200) est aménagée pour une communication avec contact et que les moyens de communication (120) sont aménagés pour permettre une communication avec contact avec la carte à puce (200), quand la carte à puce est introduite dans le réceptacle (110).

6. Dispositif (100) selon l'une des revendications précédentes, sachant que la communication sans contact, pour laquelle la carte à puce (200) est aménagée, est une communication sans contact à portée plus courte que la portée de la communication sans contact pour laquelle les moyens de communication (120) sont aménagés.

7. Dispositif (100) selon l'une des revendications précédentes, sachant que la communication sans contact, pour laquelle la carte à puce (200) est aménagée, est une communication sans contact à taux de transfert inférieur au taux de transfert de la communication sans contact pour laquelle les moyens de communication (120) sont aménagés.

8. Dispositif (100) selon l'une des revendications précédentes, sachant que la communication sans contact, pour laquelle la carte à puce (200) est aménagée, est une communication passive, et sachant que la communication sans contact, pour laquelle les moyens de communication (120) sont aménagés, est une communication active.

9. Dispositif (100) selon l'une des revendications précédentes, sachant que le dispositif (100) est doté de moyens d'alimentation en énergie (130).

10. Dispositif (100) selon l'une des revendications précédentes, sachant que les moyens de communication (120) sont aménagés pour permettre une communication Bluetooth avec la deuxième interface matérielle (321) et / ou sachant que la communication sans contact, pour laquelle la carte à puce (200) est aménagée, est une communication à champ proche.

11. Dispositif (100) selon l'une des revendications précédentes, sachant que le dispositif (100) est doté de moyens de communication supplémentaires (150), qui sont aménagés pour permettre la communication sans contact de la carte à pouce (200) avec la première interface matérielle (311).

12. Dispositif (100) selon la revendication 11, sachant que les moyens de communication supplémentaires (150) peuvent être désactivés au moins partiellement.

13. Dispositif (100) selon l'une des revendications précédentes, sachant que la carte à pouce (200) est introduite dans le dispositif (100).

14. Dispositif (100) selon l'une des revendications précédentes, sachant que le dispositif fait partie d'une clé de véhicule automobile.

15. Utilisation du dispositif selon l'une des revendications précédentes pour l'authentification par rapport à un système de fermeture de véhicule automobile.
